# EUROPÄISCHE PATENTSCHRIFT

(11) **EP 2 158 271 B1**
(45) Veröffentlichungstag und Bekanntmachung des Hinweises auf die Patenterteilung: **20.10.2010**
(21) Anmeldenummer: 08758107.0
(22) Anmeldetag: 22.05.2008
(51) Int. Cl.: C08L 97/02, B27K 3/50, B27N 3/00

(54) **HYDROPHOBIERTE LIGNOCELLULOSEN, WERKSTOFFE ENTHALTEND HYDROPHOBIERTE LIGNOCELLULOSEN UND VERFAHREN ZUR HYDROPHOBIERUNG VON LIGNOCELLUSOSEN**
HYDROPHOBIZED LIGNOCELLULOSE, MATERIALS COMPRISING HYDROPHOBIZED LIGNOCELLULOSE, AND METHOD FOR HYDROPHOBIZING LIGNOCELLULOSE
LIGNOCELLULOSES RENDUES HYDROPHOBES, MATÉRIAUX CONTENANT DES LIGNOCELLULOSES RENDUES HYDROPHOBES ET PROCÉDÉ POUR RENDRE HYDROPHOBE DES LIGNOCELLULOSES

(30) Priorität: 23.05.2007 DE 102007024261
(43) Veröffentlichungstag der Anmeldung: 03.03.2010
(73) Patentinhaber: Sasol Wax GmbH, 20457 Hamburg (DE)
(72) Erfinder: BUCHHOLZ, Thomas, 21391 Reppenstedt (DE); MEYER, Gernot, 21244 Rosengarten (DE)
(74) Vertreter: Schupfner, Georg
(86) Internationale Anmeldenummer: PCT/DE2008/000866
(87) Internationale Veröffentlichungsnummer: WO 2008/141635

(56) Entgegenhaltungen:
- EP-A- 0 827 994
- EP-A- 1 260 331
- DE-A1- 2 034 208
- DE-A1- 19 843 493
- GB-A- 114 201
- GB-A- 349 440
- GB-A- 1 414 635
- US-A- 1 664 601
- US-A- 1 992 010
- US-A- 1 992 020
- US-A- 4 013 474
- US-A- 4 618 640
- US-A- 5 882 713
- DATABASE WPI Week 2000 Thomson Scientific, London, GB; AN 2000-384715 [37] XP002493555 -& JP 2002 294080 A 9. Oktober 2002 (2002-10-09)
- DATABASE WPI Thomson Scientific, London, GB; AN 2000-568000 [53] XP002493436 -& JP 2000 204336 A 25. Juli 2000 (2000-07-25)

## Beschreibung

Die Erfindung betrifft hydrophobierte Lignocellulosen sowie aus Lignocellulosen, wie Holzfasern, Holzspäne und Stands hergestellte Werkstoffe, insbesondere Holzwerkstoffe, jeweils enthaltend Paraffinwachse und aliphatische polycyclische Ester als. Hydrophobierungsmittel und ein Verfahren unter Verwendung derartiger Hydrophobierungsmittel.

Vielfach ist es gewünscht, Wasseraufnahme und Quellneigung von saugfähigen Werkstoffen, wie Holzwerkstoffen, zu reduzieren. Daneben sollen die Holzwerkstoffe hohe Biegefestigkeiten und Querzugfestigkeiten besitzen. Nach in Europa geltenden Normen (DIN EN 317, DIN EN 312, DIN EN 319; EN 622) müssen Holzwerkstoffe bestimmten Anforderungen in Bezug auf Dickenquellung und Wasseraufnahme genügen. Der Grund hierfür ist die Eigenschaft von Lignocellulose-Materialien, bei Kontakt mit Wasser oder in feuchter Luftatmosphäre Wasser einzulagern und in trockener Atmosphäre wieder abzugeben. Die damit einhergehende Quellung bzw. Schwindung und die damit verbundene mangelnde Dimensionsstabilität der Materialien ist nicht nur für viele Anwendungen unerwünscht, sondern kann auch zur Rissbildung führen. Zudem werden viele Materialien in feuchtem Zustand leicht von Holz abbauenden oder Holzverfärbenden Mikroorganismen befallen,

Um die geforderten Grenzwerte einzuhalten, werden Holzwerkstoffe beim Produktionsprozess mit Hydrophobierungsmitteln versehen. Neben einer Reduktion der Dickenquellung und der Wasseraufnahme soll das Hydrophobierungsmittel die Produkteigenschaften wie die Querzugsfestigkeit und die Biegefestigkeit des aus diesem erstellten Holzwerkstoff nicht negativ beeinflussen. Insbesondere Holzwerkstoffe, wie z. B. Faserplatten zum Einsatz als Trägerplatten in Laminatfußböden, haben sehr hohe Anforderungen an die Dickenquellung, Wasseraufnahme und Kantenquellung.

Wachse sind eine Klasse von Stoffen, die durch ihre mechanisch-physikalischen Eigenschaften definiert sind. Wachse sind hierbei i.d.R. Multi-Komponentensysteme. Wachs im Sinne dieser Erfindung sind Zusammensetzungen, die bei 25°C fest sind, z.B. von verformbar weich über knetbar bis brüchig hart (jeweils bei Normaldruck, 1013 mbar).

Wachse schmelzen über dem Erstarrungspunkt ohne Zersetzung und sind wenig oberhalb des Schmelzpunktes flüssig und hierbei i.d.R. relativ niedrig viskos und nicht fadenziehend.

Die Anwendung von Wachsen auf bzw. in derartigen Werkstoffen bzw. deren Einsatzstoffen enthaltend bzw. bestehend aus Lignocellulosen als Hydrophobierungsmittel, auch in Form wässriger Dispersionen, ist an sich bekannt.

Zur Hydrophobierung von aus Lignocellulosen bestehenden Holzwerkstoffen mit Paraffin sind eine Reihe von Untersuchungen bekannt. Hierzu ist z.B. auf den Aufsatz von Roffael, E., Schriever, E., May, H.-A., Adhäsion 11(1982), S.10-19, "Hydrophobierung von Spanplatten mit Paraffin", Teil 1 und auf die Veröffentlichung von May, H.-A.und Roffael, E. "Hydrophobierung von Spanplatten mit Paraffinen", Teil 4 (Adhäsion 28, (1,2), 17-21) hinzuweisen.

Aufgabe der vorliegenden Erfindung ist es, ein Hydrophobierungsmittel für Lignocellulosen bereitzustellen, das über eine gegenüber rein paraffinischen Wachsphasen verbesserte Hydrophobierungswirkung verfügt bzw. mit weniger Zugabemenge Hydrophobierungsmittel eine vergleichbare Hydrophobierungswirkung entfaltet.

Obige Aufgaben sind gelöst durch die hydrophobierten Lignocellulosen, das Verfahren hierzu und die Werkstoffe enthaltend die hydrophobierten Lignocellulosen jeweils gemäß unabhängigen Ansprüchen. Bevorzugte Ausführungsformen sind Gegenstand der Unteransprüche oder nachfolgend beschrieben.

Die Erfindung betrifft weiterhin ein Verfahren zum Hydrophobieren von Holzwerkstoffen enthaltend Lignocellulosen, bei dem man das Lignocellulose-Material mit einem derartigen Hydrophobierungsmittel imprägniert. Das Material bildet nach Verpressen den Werkstoff, insbesondere einen Holzwerkstoff. Häufig ist dem Verpressen eine Trocknung vorgeschaltet.

Zur Herstellung der Holzwerkstoffe werden Bindemittel eingesetzt. Als Bindemittel kann beispielsweise ein säurehärtendes Harnstoffformaldehydharz verwendet werden. Es kann sich auch um ein alkalisch härtendes Phenolformaldehydharz handeln. Weiter kann das Bindemittel alternativ auch ein Klebstoff auf Basis eines polymeren Diphenylmethandiisocyanat (PMDI) sein oder ein Tanninformaldehydharz.

Das Hydrophobierungsmittel kann in Form einer Schmelze oder einer Dispersion auf die Lignocellulosen aufgebracht werden. Im Falle der Verwendung von Dispersionen ist die kontinuierliche Phase Wasser und die diskontinuierliche Phase das Wachs, wobei das Wachs anteilig langkettige Kohlenwasserstoffe enthält.

Aliphatische langkettige Kohlenwasserstoffe im Sinne der vorliegenden Erfindung sind Verbindungen, die ausschließlich aus Kohlenstoff und Wasserstoff bestehen und insbesondere Erstarrungspunkte von größer 35 bis 150 °C, vorzugsweise 40 bis 100 °C (bei Normaldruck und ggf. in Bezug auf die Stoffzusammensetzung), aufweisen bzw. unabhängig hiervon mittlere C-Zahlen von 20 bis 100 Kohlenstoffatomen, insbesondere 20 bis 50 Kohlenstonffatomen, haben. Als Kohlenwasserstoffe kommen gesättigte oder ungesättigte Kohlenwasserstoffe (aliphatische Kohlenwasserstoffe), vorzugsweise aber gesättigte Kohlenwasserstoffe in Frage.

Die Kohlenwasserstoffe können erdölbasierte Paraffinwachse, ein Fischer-Tropsch Wachs, ein Polyolefinwachs sein, aus Mischungen dieser bestehen und/oder ein Raffinationsprodukt dieser sein. Nachfolgend sind für den erfindungsgemäßen Einsatz geeignete Typen beschrieben.

Die langkettigen gesättigten aliphatischen Kohlenwasserstoffe werden häufig als Paraffinwachse bezeichnet. Die in der Industrie üblicherweise verwendeten Paraffinwachse sind Produkte der Erdölraffination und bestehen hauptsächlich aus Mischungen von bei über 35°C festen n- und iso-Alkanen unterschiedlicher Mengenverhältnisse. Auch der Einsatz von Fischer-Tropsch Wachsen ist möglich.

Die einsetzbaren Paraffinwachse können in makro- und mikrokristalline Wachse eingeteilt werden. Makrokristalline Wachse bestehen aus gesättigten, überwiegend geradkettigen, überwiegend unverzweigten Kohlenwasserstoffen (n-Alkane) und besitzen ein Molekulargewicht, das etwa zwischen 280 und 700 (g/mol) liegt (Anzahl der Kohlenstoffatome in der Kette zwischen 20 und etwa 50).

Im Unterschied zu den makrokristallinen Paraffine bestehen die mikrokristallinen Paraffine vorwiegend aus verzweigen Alkanen (iso-Alkane) und gesättigten ringförmigen Kohlenwasserstoffen (cyclo-alkane). Der Schmelzbereich liegt zwischen 60 °C und 90 °C. Mikrokristalline Paraffine sind auch durch Hydroisomerisierung von Fischer-Tropsch-Wachsen zugänglich.

Unter Fischer-Tropsch-Wachs wird das durch eine Fischer-Tropsch-Synthese gewonnene Paraffin verstanden. Die Anzahl der Kohlensloffatome in der Kette liegt zwischen 20 und 100. Der Erstarrungspunkt bei ca. 35 °C bis ca. 105 °C. Im Weiteren wird hierzu auch auf die Veröffentlichung von A. Kühnle in Fette, Seifen, Anstrichmittel 84. Jahrgang, Nr.4, Seiten 156 bis 162 verwiesen.

Weiterer zwingender Bestandteil der Wachsphase bzw. des Hydrophobierungsmittels sind aliphatische polycyclische Ester. Diese umfassen mindestens zwei (unmittelbar) verknüpfte Kohlenstoffeyklen, insbesondere drei und mehr Kohlenstoffeyklen, vorzugsweise in Form von 6-Ringen. Die aliphatischen polycyclischen Ester werden nachfolgend in Bezug auf ihre Säuregruppe und Alkoholgruppe erläutert.

Es ist zumindest eine Carboxylgrupe (COO(H)) mit dem Polycyclus verknüpft, vorzugsweise direkt über das Carbonyl-Kohlenstoffatom. Die Säuregruppe weist vorzugsweise nur eine Carboxylgruppe auf. Diese Gruppe bildet dann die Säuregruppe. Die Säuregruppe(n) der aliphatischen polycyclischen Ester sind insbesondere aus Harzsäuren (Englisch: tall oil rosin) erhältlich. Chemisch handelt es sich bei den Harzsäuren in Abhängigkeit von der Rohstoffquelle häufig um Carbonsäuren, die auf Terpenen basieren.

Typische Vertreter geeigneter Harzsäuren sind Abietinsäure, Neoabietinsäure, Lävopimarsäure, Pimarsäure und Palustrinsäure. Die erfindungsgemäß eingesetzten Komponenten sind somit z.B. aus Abietinsäure oder Pimarinsäure durch Veresterung erhältlich.

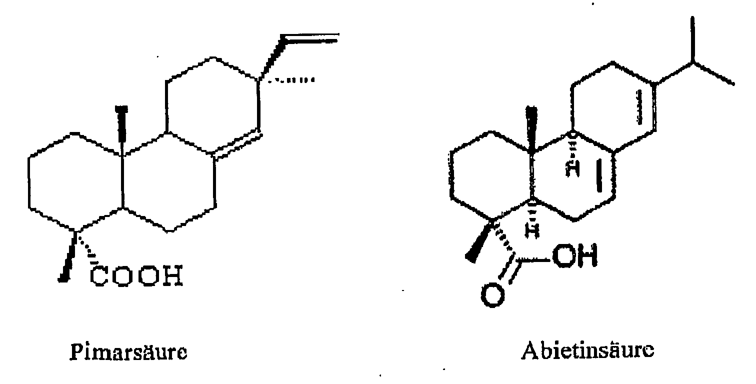

Neben der Abietinsäure ((CH₃)₄C₁₅H₁₇COO(H)) sind auch Neoabietinsäure, Palustrinsäure oder Dehydroabietinsäure einsetzbar, für die Pimarsäure ((CH₃)₃(CH₂)C₁₅H₂₃COO(H)) seien die Levopimarinsäure und die Isopimarinsäure genannt. Insbesondere sind auch deren doppelbindungs-hydrierte Varianten geeignet.

Geeignete kommerziell erhältliche Produkte sind: Sylvatec® RE 90 (Arizona Chemical), Pentalyn® H-E Ester (Eastman Chemical), Permalyn® 5110 (Eastman Chemical) und Foral 105-E und Foralyn 110-E (Eastman Chemical). Besonders bevorzugt sind solche Ester obiger polycyclischer Carbonsäuren, die Pentaerythrit als Alkohol-Gruppe enthalten.

Die die Säuregruppe bildenden Harzsäuren gehören zur Stoffgruppe der tricyclischen Diterpen-Carbonsäuren. Abietinsäure ist z.B. Hauptbestandteil des Koniferenharzes. Erhitzt man Kiefernharze in geschlossenen Kesseln auf über 100 °C, so destillieren Wasser und Terpentinöl über, während die im Kessel zurückbleibende Schmelze bei der Abkühlung zu einer glasartigen Masse - Kolophonium genannt - erstarrt, deren Hauptbestandteil die Abietinsäure einschließlich verschiedener Isomere (Dextropimarsäure, Laevopimarsäure usw.) ist. Es ist auch möglich, die polycyclischen Carbonsäuren mit Mono-Alkoholen, typischerweise mit C1- bis C32- Alkoholen wie Methanol, zu verestern.

Die Alkoholgruppe der Ester ist ein Polyol, wobei nur ein Teil der Hydroxy-Gruppen vorzugsweise aber alle verestert sein können (partielle und volle Veresterung), insbesondere Polyole aufweisend 2 bis 8 Hydroxy-Gruppen, vorzugsweise 3 bis 8 Hydroxy-Gruppen und zwei bis 12 Kohlenstoffatome, Geeignete Alkohole sind Ethylenglykol, Triethylenglykol, Glycerol oder Neopentylglykol und insbesondere Pentaerythritol. Es ist auch möglich, die Polyole durch Dicarbonsäuren zu verknüpfen oder einige der Alkoholgruppcn durch andere Monocarbonsäuren zu verestern. Ebenso einsetzbar sind Polyole aufweisend Ether-Gruppen wie Dipentacrythrit (CAS Numer : 126-58-9).

Beispiele für mehrwertige Alkohole sind Polyethylenglykol, Polypropylenglykol, Polybutylenglykol, Cyclohexandiol, Glycerin, Diglycerin, Neopentylglykol, Trimethylolpropan, Trimethylolethan, Pentacrythrit, Dipentaerythrit, Sorbitan, Sorbit, Butandiol, Butantriol, 2-Buten-1,4-diol, 2-n-Butyl-2-ethylpropandiol, 2-Butan-1,4-diol, 3-Chlor-1,2-propandiol, 1,4-Cyclohexandimethanol, 3-Cyclohexen-H-dimethanol, Decalindiol, 2,3-Dibrom-2-buten-1,4-diol, 2,2-Diethyl-1,3-propandiol, 1,5-Dihydroxy-1,2,3,4-tetrahydronaphthalin, 2,5-Dimethyl-2,5-hexandiol, 2,2-Dimethyl-1,3-propandiol, 2,2-Diphenyl-1,3-propandiol, Dodecandiol, Mesoerythrit, 2-Ethyl-1,3-hexandiol, 2-Ethyl-2-(hydroxymethyl)-1,3-propandiol, 2-Ethyl-2-methyl-1,3-propandiol, Heptandiol, Hexandiol 3-Hexen-2,5-diol, 2-Methyl-1,4-butandiol, 2-Methyl-2,4-pentandiol, Nonandiol, Octandiol, Pentandiol, 1-Phenyl-1,2-ethandiol, Propandiol, 2,2,4,4-Tetramethyl-1,3-cyclobutandiol, Glucose alpha -(1-Aminoethyl)p-hydroxybenzylalkohol, 2-Amino-2-ethyl-1,3-propandiol, 2-Amino-2-methyl-1,3-propandiol, 3-Amino-1,2-propandiol, N-(3-Aminopropyl)diethanolamin, N,N-Bis(2-hydroxyethyl)piperazin, 2,2-Bis(hydroxymethyl)-2,2'2"-nitrilotriethanol, 2,2-Bis(hydroxymethyl)propionsäure, 1,3-Bis(hydroxymethyl)harnstoff, 1,2-Bis(4-pyridyl)-1,2-ethandiol, N-n-Butyldiethanolamin, Diethanolamin, N-Ethylendiethanolamin, Triethanolamin und alpha -(1-Aminoethyl)-p-hydroxybenzylalkohol.

Erfindungsgemäß kommen die Wachse in Form einer wässrigen Dispersion oder in geschmolzenem Zustand zur Anwendung. In den Dispersionen liegen die Wachsbestandteile als disperse Phase, d. h. in Form feinster, verteilter Partikel vor. Typischerweise liegen die mittleren Teilchendurchmesser bei 10 nm bis 10 µm, insbesondere 0,1 - 3 µm. Die hier angegebenen Teilchengrößen sind gewichtsmittlere Teilchengrößen, wie sie durch dynamische Lichtstreuung ermittelt werden können. Verfahren hierzu sind dem Fachmann geläufig, beispielsweise aus H. Wiese in D. Distler, Wässrige Polymerdispersionen, Wiley VCH 1999, Kapitel 4.2.1, S. 40ff und dort zitierte Literatur sowie H. Auweter, D. Hörn, J. Colloid Interf. Sei. 105 (1985) 399, D. Lüge, D. Hörn, Colloid Polym. Sci. 269 (1991) 704 oder H. Wiese, D. Hörn, J. Chem. Phys. 94 (1991) 6429.

Die Dispersion wird mit einem Emulgator stabilisiert. Emulgatoren sind grenzflächenaktive amphotere Substanzen oder hochmolekulare Substanzen. Der Emulgator kann anionisch, kationisch, nicht-ionogen oder von Betain-Struktur sein.

Als Emulgatoren seien genannt:
- Alkoholpolyethylenglykolether, z.B. solche der allgemeinen Formel R-O-(R¹-O)ₙ-H,
- Fettsäureesterpolyethylenglykolether, z.B. solche der allgemeinen Formel R-COO-(R¹-O)ₙ-H,
- Alkylpolyalkylenglykolethercarbonsäuren, z.B. solche der allgemeinen Formel R-O-(R¹-O)ₙ-CH₂-COOH bzw. deren Alkanolammonium- oder Alkali- oder Erdalkalimetallsalze,
- Alkylamidoalkylbetaine, z.B. solche der allgemeinen Formel R-CONH(CH₂)ᵤN⁺(CH₃)₂- CH₂-COO⁻,
- Aminoxide, z.B. solche der allgemeinen Formel R-NO(CH₃)₂,
wobei jeweils
- R: einen verzweigten oder linearen, gesättigten oder ungesättigten C₈- bis C₂₀- bzw. C₇ - bis C₁₉ - Kohlenwasserstoffrest,
- n: eine Zahl von 2 bis 20,
- R¹: einen Alkylenrest mit 2 bis 4 Kohlenwasserstoffen, z.B. -C₂H₄- oder -C₃H₆-, ggf. für jedes n verschieden, und
- u: eine Zahl von 1 bis 10 darstellt.

- Produkte aus der Alkoxylierung von Triglyceriden, die ganz oder teilweise mit C₆- bis C₂₂ - Fettsäuren verestert sind, wobei pro Mol Triglycerid 2 bis 40 Mol Alkoxylierungsmittel eingesetzt werden.
- Partiell neutralisierte Partialglyceride von ein oder mehrwertigen C2- bis C22- Carbonsäuren, wie z.B. Linolsäure, Stearinsäure, Isostearinsäure, Palmitinsäure, Laurinsäure, Caprylsäure, Caprinsäure, Citronensäure und/oder Milchsäure.
- Ester des Polyglycerins, worin die Carbonsäure-Gruppe vorzugsweise 2 bis 22 Kohlenstoffatome aufweist.
- C6- bis C32- Carbonsäuren, insbesondere C8- bis C26- Fettsäuren vollständig oder partiell, insbesondere vollständig verseift, z.B. mit Aminen oder Aminverbindungen wie Alkanolaminen (z.B. Diethanolamin).

Zu den anionischen Emulgatoren gehören beispielsweise Carboxylate, insbesondere Alkali-, Erdalkali- und Ammoniumsalze von Fettsäuren, z. B. Kaliumstearat, die üblicherweise auch als Seifen bezeichnet werden; Acylglutamate; Sarkosinate, z. B. Natriumlauroylsarkosinat; Taurate; Methylcellulosen; Alkylphosphate, insbesondere Mono- und Diphosphorsäurealkylester; Sulfate, insbesondere Alkylsulfate und Alkylethersulfate; Sulfonate, weitere Alkyl- und Alkylarylsulfonate, insbesondere Alkali-, Erdalkali- und Ammoniumsalze von Arylsulfonsäuren sowie alkylsubstituierte Arylsulfonsäuren, Alkylbenzolsulfonsäuren, wie beispielsweise Lignin- und Phenolsulfonsäure, Naphthalin- und Dibutylnaphthalinsulfonsäuren, oder Dodecylbenzolsulfonate, Alkylnaphthalinsulfonate, Alkylmethylestersulfonate, Kondensationsprodukte von sulfoniertem Naphthalin und Derivaten davon mit Formaldehyd, Kondensationsprodukte von Naphthalinsulfonsäuren, Phenol- und/oder Phenolsulfonsäuren mit Formaldehyd oder mit Formaldehyd und Harnstoff, Mono- oder Dialkylbernsteinsäureestersulfonate; sowie Eiweisshydrolysate und Lignin-Sulfitablaugen, ggf. in Form ihrer neutralen oder gegebenenfalls basischen Salze.

Zu den nichtionischen Emulgatoren gehören z.B. Fettalkoholalkoxylate und Oxoalkoholalkoxylate, insbesondere Ethoxylate und Propoxilate mit Alkoxylierungsgraden von üblicherweise 2 bis 80 und insbesondere 3 bis 40, z. B. Alkoxylate von C8- bis C30-Alkanolen oder Alk(adi)enolen, z. B. von iso-Tridecylalkohol, Laurylalkohol, Oleylalkohol oder Stearylalkohol sowie deren Alkylether und Alkylester, z.B. deren Acetate; alkoxylierte tierische und/oder pflanzliche Fette und/oder Öle, beispielsweise Maisölethoxylate, Rizinusölethoxylate, Talgfettethoxylate mit Alkoxylierungsgraden von üblicherweise 2 bis 80 und insbesondere 3 bis 40, Glycerinester, wie beispielsweise Glycerinmonostearat, Fettsäureester polymerer Alkoxylate, insbesondere von Polyethylenoxiden mit Alkoxilierungsgraden von 3 bis 100 wie z. B. PEG 300-Oleat, -Stearat oder Laurat, als Monooder Diester, - Copolymere Alkoxylate aus Ethylenoxid und Propylenoxid, z. B. die Pluronic® - Marken der BASF, Alkylphenolalkoxylate, wie beispielsweise ethoxyliertes iso-Octyl-, Octyl- oder Nonyl-phenol, Tributylphenolpolyoxyethylenether mit Alkoxylierungsgraden von üblicherweise 2 bis 80 und insbesondere 3 bis 50, - Fettaminalkoxylate, Fettsäureamid- und Fettsäurediethanolamidalkoxylate mit Alkoxylierungsgraden von üblicherweise 2 bis 80 und insbesondere 3 bis 50, insbesondere deren Ethoxylate, Zuckertenside, Sorbitester, wie beispielsweise Sorbitanfettsäureester (Sorbitanmonooleat, Sorbitantristearat), Polyoxyethylensorbitanfettsäureester, Alkylpolyglycoside, N-Alkylgluconamide, Alkylmethylsulfoxide, Alkyldimethylphosphinoxide, wie beispielsweise Tetradecyldimethylphosphinoxid.

Weitere Emulgatoren, die hier beispielhaft genannt werden sollen, sind Perfluoremulgatoren, Silikonemulgatoren, Phospholipide, wie beispielsweise Lecithin oder chemisch modifizierte Lecithine, Aminosäureemulgatoren, z. B. N-Lauroylglutamat.

Emulgatoren im Sinne der Erfindung sind auch hochmolekulare Substanzen wie Gummi Arabicum, Gum Ghatti oder Celluloseverbindungen.

Möglich sind auch Emulgator-Gemische, z.B ein anionischer und ein nicht-ionischer Emulgator. Die Emulgatoren sind zu 0,2 bis 10 Gew.%, insbesondere zu 2 bis 6 Gew.% bezogen auf die Gesamtzusammensetzung zugesetzt.

Der Emulgierprozess gliedert sich i.d.R. in folgende Abschnitte: Einbringen der aliphatischen polycyclischen Ester in die Wachsphase, Vormischen der einzelnen Komponenten zu einer grobdispersen Voremulsion (Premix) und Feinemulgieren durch Tropfenaufbruch beim Überschreiten der kritischen Deformation und Stabilisieren der neu entstandenen Phasengrenzflächen durch den Emulgator.

Das Hydrophobierungsmittel wird als Festwachs oder in Form von Dispersionen bei der Herstellung der Holzwerkstoffe auf Basis von Strands, Spänen oder Fasern zugegeben, um deren Hydrophobierung, insbesondere in Form von Platten, zu bewirken und vor allem die Wasseraufnahme und das hierdurch verursachte Quellen zu verringern. Als Messwert wird häufig die Dickenquellung nach 2 h bzw. nach 24 h Lagerung in Wasser herangezogen (z.B. nach DIN EN 622 und DIN EN 317). Die Hydrophobierung soll einer Verringerung der mechanischen Festigkeiten unter dem Einfluss der Feuchtigkeit entgegenwirken und Längen- oder Dickenausdehnungen bei höherer Umgebungsfeuchte vermeiden helfen.

Die Hydrophobierungsmittel verlangsamen die Wasseraufnahme und die Dickenquellungsgeschwindigkeit bei Unterwasserlagerung. Neben der eigentlichen Hydrophobierungswirkung verbessern die Wachse auch die Gleitfähigkeit der Späne, Strands oder Fasern. Dies wirkt sich positiv auf die Förderbarkeit und Streufähigkeit der Späne, Strands oder Fasern aus.

Die Wachse können in Form einer wässrigen Dispersion auf die Späne aufgebracht werden. Die Wachsdispersionen können sowohl als Gemisch mit dem Bindemittel aufgedüst werden als auch getrennt vor oder nach der Bindemittelzugabe auf die Späne, Strands oder Fasern aufgebracht werden.

Die Wachse sollen keine oder wenig Einfluss auf das Abbinden der Deckschicht- (DS) und/oder Mittelschichtleime haben. Gängig sind säurehärtende Hamstoffstoffformaldehydharze, alkalisch härtende Phenolformaldehydharze, PMDI oder Tanninformaldehydharze.

Das erfindungsgemäße Verfahren eignet sich grundsätzlich zum Hydrophobieren beliebiger Lignocellulose-Materialien mit beliebigen Abmessungen. Insbesondere eignet sich das erfindungsgemäße Verfahren zum Imprägnieren von Holz.

Das erfindungsgemäße Verfahren erlaubt sowohl das Hydrophobieren feinteiliger Materialien wie Fasern, Späne, Strands, Chips, Schnitzel und dergleichen, flächiger dünner Materialien mit Dicken <= 5 mm, insbesondere <= 1 mm wie Furniere und insbesondere auch das Imprägnieren großformatiger Teile mit Mindestabmessungen oberhalb 1 mm, insbesondere > 5 mm, speziell >= 10 mm. Die erfindungsgemäßen Zusammensetzungen eignen sich insbesondere zum Imprägnieren von Holz oder Holzwerkstoffen, speziell zum Imprägnieren von Spanplatten bzw. Faserplatten (einschließlich Grobspanplatten, bzw. OSB-Platten, oder Flachpressplatten). Die erfindungsgemäß verwendeten Zusammensetzungen eignen sich auch zum Imprägnieren anderer, von Holz verschiedener Lignocellulose-Materialien, z. B. von Naturfaserstoffen wie Bambus, Stroh, Flachs, Bagasse, Baumwollstängel, Jute, Sisal, Kokosfasern, Bananenfasern, Schilf, z. B. Chinaschilf, Ramie, Hanf, Manilahanf, Esparto (Alfagras), Reisschalen und Kork.

Das Imprägnieren kann in an sich üblicher Weise erfolgen, z. B. durch Tauchen oder Besprühen. Ebenso können Druck und Vakuum eingesetzt werden.

Die nachfolgenden Beispiele dienen der Erläuterung der Erfindung ohne diese zu beschränken.

### Versuchsbeschreibung

Unter Verwendung eines thermomechanischen Faserstoffs und eines Harnstoff-Formaldehydharzes (BASF K 350) wurden im Labormaßstab unter Zugabe der Wachse in Form einer wässrigen Dispersion mitteldichte Faserplatten (MDF) im Blender-Verfahren hergestellt, und diese auf die folgenden physikalisch-technologischen Eigenschaften untersucht: Rohdichte (EN 323), Feuchtegehalt (EN 322), Dickenquellung (2h und 24h in Anlehnung an EN 317), Wasseraufnahme (2h und 24h in Anlehnung an DIN 52351) und Kantenquellung (2h und 24h in Anlehnung an EN 13329).

Als Rohstoff für die Herstellung der MDF wurde ein thermomechanischer Faserstoff (TMP) verwendet. Zur Herstellung der MDF wurde die jeweilige Wachsdispersion zusammen mit dem Bindemittel (BASF K 350) auf den Faserstoff aufgetragen. Anschließend wurden die beleimten Fasern zu einer Faserstoffmatte von 45 cm x 45 cm gestreut und zu 19 mm dicken MDF gepresst. Die Bedingungen für die Herstellung der MDF fasst Tabelle 1 zusammen.

Nach dem Pressen wurden die Platten auf eine durchschnittliche Dicke von 18,5 mm geschliffen und besäumt. Anschließend wurden die MDF über einen Zeitraum von einer Woche im Normalklima (20 °C / 65 % rel. Luftfeuchte gem. DIN 50 014) gelagert. Aus den MDF wurden Prüfkörper entsprechend den jeweiligen Prüfnormen ausgeformt. Anschließend erfolgte die Ermittlung der geforderten physikalisch-technologischen Eigenschaften (Dickenquellung, Kantenquellung und Wasseraufnahme) der Platten.

Die Ergebnisse der Prüfungen sind in Tabelle 2 zusammengestellt. Die Referenzplatten ohne Hydrophobierungsmittel (Blindwert) zeigten die höchste Dickenquellung, Kantenquellung und Wasseraufnahme, gefolgt von der Referenz Paraffinwachsdispersion. Von den eingesetzten, mit aliphatisch polycyclischen Estern modifizierten Dispersionen wies Sylvatec RE90 eine verbesserte Hydrophobierungswirkung bei deutlich niedrigerer Dickenquellung, Kantenquellung und Wasseraufnahme auf. Die Ergebnisse wurden an jeweils 3 Mustern aus zwei hergestellten Platten ermittelt. Erfindungsgemäß wurde ein Anteil Paraffinwachs mit aliphatischen polycyclischen Ester ersetzt. Die Zusammensetzung der eingesetzten Paraffinwachse war jeweils gleich.

In weiteren Untersuchungen wurde ein Optimum bei 6 bis 14 Gew.%, insbesondere etwa 10 Gew.% aliphatisch polycyclischen Estern in und bezogen auf die Wachsphase bzw. das Hydrophobierungsmittel gefunden und die Wirkung bestätigt.

In weiteren Untersuchungen wurde ein Pentaerythrit-Ester (Pentalyn H-E) mit unterschiedlichen Einsatzkonzentrationen (0 bis 3 Gew.% Feststoff der Wachsdispersion bezogen auf Fasern atro (atro = auf die Trockenmasse Lignocellulosen bezogen) bei der Herstellung von MDF eingesetzt. Tabelle 4 zeigt die Ergebnisse: Tabelle 4 zeigt eine deutliche Verbesserung der Hydrophobierung durch das mit Pentaerithrit-Ester modifizierte Paraffin über den Konzentrations-Bereich von 0,25% bis 3% Hydrophobierungsmittel (Feststoff bezogen auf Fasern atro).

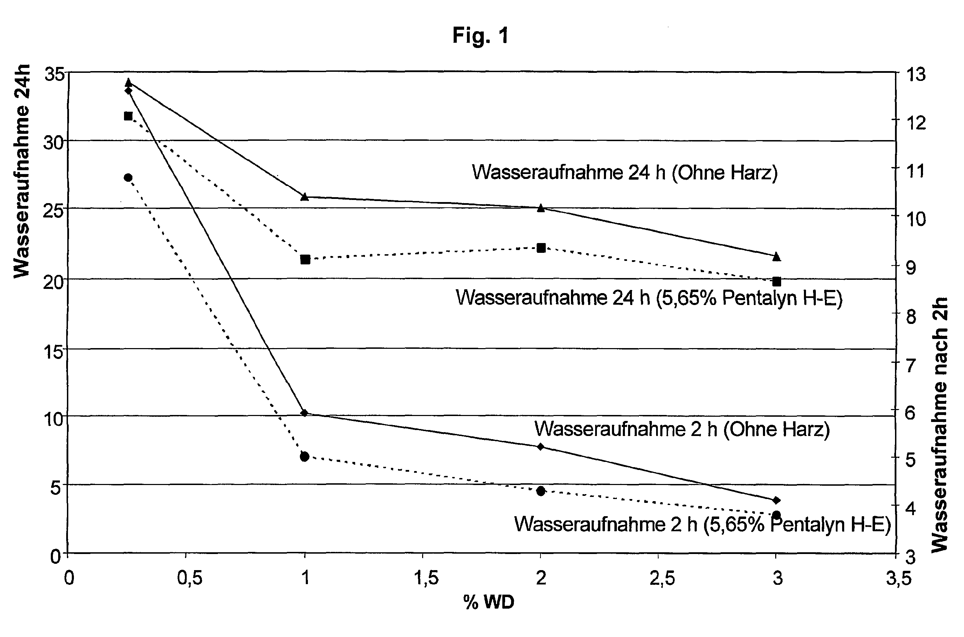

Fig. 1 zeigt das Beispiel der Wasseraufnahme nach 2 h und nach 24 h mit und ohne Zusatz an Pentalyn H-E wie in Tabelle 4 gezeigt. Es ist zu erkennen, dass mit wesentlich geringerer Zugabemenge des erfindungsgemäßen Hydrophobierungsmittels vergleichbare Ergebnisse erzielt werden können, bzw. bei gleicher Zugabemenge die Quelleigenschaften wesentlich verbessert werden können.

**Tabelle 1**

| *Versuchsparameter* | |
|---|---|
| Solldicke | 19 mm nach Schleifen (20 mm Distanzleisten) |
| Sollrohdichte | 0,78 Gew.-% g/cm³ |
| Presstemperatur | 200 °C |
| Schließzeit | 30 s |
| Presszeit | 20 s/mm |
| Hydrophobierungsmitteldosierung | 0,25% Feststoff bezogen auf Fasern atro |
| Feststoffgehalt | 60 Gew.-% |
| Hydrophobierungsmittel | |
| Bindemittel | BASF Kaurit 350 |
| | 10 Gew.% Feststoff auf atro Faserstoff |
| Härtungsbeschleuniger | Ammoniumsulfat (40 Gew.%ige Lösung) |
| | 2 Gew.% Feststoff auf Festharz |
| Feuchtegehalt beleimter Fasern | 11 Gew.% |

**Tabelle 2**

| *Feuchtegehalt, Rohdichte sowie Wasseraufnahme, Dickenquellung und* *Kantenquellung gemessen jeweils nach 2h und 24h* *(Gehalt Harztyp 10 Gew. %, bezogen auf die. Wachsphase, Rest Paraffin)* | | | | | | |
|---|---|---|---|---|---|---|
| | **V** | **V** | **V** | **E** | **E** | **V** |
| | **1** | **2** | **3** | **4** | **5** | **6** |
| | **Blindwert o. WD** | **Paraffinische Wachsphase** | **Escorez 1102F** | **Sylvatec RE90** | **Dertoline SG2** | **Escorez 5380** |
| Harztyp | - | | Aliphatische KW (kein Ester) | Pentaerythritveresterte polycyclische Carbonsäure wie aus Kolophonium erhältlich | Glycerin veresterte polycyclische Carbonsäure wie aus Kolophonium erhältlich | Cycloaliphatische KW (kein Ester) |
| Feuchte [%] | 7,51 | 7,48 | 7,73 | 7,48 | 7,58 | 7,66 |
| Rohdichte *[g*/*cm"]* | 0,780 | 0,777 | 0,779 | 0,775 | 0,777 | 0,771 |
| Wasseraufnahme 2h [%] | 6,5 | 5,4 | 5,5 | 4,7 | 5,4 | 5,7 |
| Wasseraufnahme 24h [%] | 26,6 | 22,9 | 23,1 | 19,9 | 23,1 | 24,2 |
| Dickenquellung 2h [%] | 3,2 | 2,7 | 2,6 | 2,1 | 2,6 | 2,8 |
| Dickenquellung 24h [%] | 11,3 | 8,9 | 8,5 | 7,3 | 8,5 | 9,5 |
| Kantenquellung 2h [%] | 4,5 | 3,3 | 3,6 | 2,9 | 3,1 | 3,1 |
| Kantenquellung 24h [%] | 21,1 | 18,3 | 20,0 | 15,1 | 18,2 | 18,4 |

**Tabelle 3**

| *Zusammensetzung der eingesetzten Dispersionen (Gew. %)* | |
|---|---|
| Komponente | Wachsdispersion |
| Wasser | 40,7 |
| Fettsäure 18-22 | 1,7 |
| Diethanolamin | 1,1 |
| Wachsphase * | 56,5 |

| | |
|---|---|
| * = 10 Gew.% obiger Harztyp und 90 Gew.% Paraffin | |

**Tabelle 4**

| *Hydrophobierung und mechanische Eigenschaften mit und ohne aliphatisch polycyclischem Estern (Pentalyn H-E) bei unterschiedlichen Zugabemengen an Hydrophobierungsmittel (Feststoff bezogen auf Fasern atro)* | | | | | | | | | |
|---|---|---|---|---|---|---|---|---|---|
| | **Blindwert** | **0,25%** | | **1%** | | **2%** | | **3%** | |
| Pentalyn H-E [%] | 0 | 0 | 10 | 0 | 10 | 0 | 10 | 0 | 10 |
| Feuchte [%] | 6,23 | 5,74 | 5,86 | 5,96 | 6,08 | 7,42 | 7,11 | 6,95 | 7,06 |
| Rohdichte *[g*/*cm"]* | 0,707 | 0,709 | 0,706 | 0,692 | 0,685 | 0,681 | 0,693 | 0,666 | 0,694 |
| Wasseraufnahme 2h [%] | 63,6 | 12,6 | 10,8 | 5,9 | 5,0 | 5,2 | 4,3 | 4,1 | 3,8 |
| Wasseraufnahme 24h [%] | 93,8 | 34,2 | 31,8 | 25,8 | 21,4 | 25,0 | 22,4 | 21,6 | 19,8 |
| Dickenquellung 2h [%] | 14,9 | 1,8 | 1,5 | 1,4 | 1,3 | 1,1 | 1,1 | 0,9 | 1,0 |
| Dickenquellung 24h [%] | 27,6 | 9 | 8,5 | 6,1 | 5,5 | 5,5 | 5,4 | 5,2 | 4,9 |
| Kantenquellung 2h [%] | 18,5 | 14,0 | 13,1 | 3,5 | 2,9 | 2,9 | 2,6 | 2,3 | 1,9 |
| Kantenquellung 24h [%] | 23,5 | 21,5 | 20,8 | 15,8 | 14,8 | 12,8 | 11,5 | 10,5 | 10,2 |
| Querzugfestigkeit [N/mm²) | 0,5 | 0,48 | 0,49 | 0,59 | 0,54 | 0,51 | 0,5 | 0,48 | 0,45 |

## Patentansprüche

1. Zusammensetzung aufweisend die folgenden Komponenten
(a) Lignocellulosen in Form von Fasern, Spänen und / oder Strands
und
ein Hydrophobierungsmittel enthaltend:
(b.1) aliphatische Kohlenwasserstoffe mit im Mittel mehr als 20 bis 100 Kohlenstoffatomen und
(b.2) zumindest teilweise veresterte aliphatische polycyclische Carbonsäuren, wobei die zur Veresterung der aliphatischen polycyclischen Carbonsäuren eingesetzten Alkohole Polyole sind, die 2 bis 8 Hydroxy-Gruppen und zwei bis 12 Kohlenstoffatome aufweisen und
wobei die Komponenten (b.1) und (b.2) in der Zusammensetzung enthalten sind:
- in der Summe zu 0,2 bis 5 Gew.%, bezogen auf die Trockenmasse von (a) und
- in einem Gewichtsverhältnis von 40 : 1 bis 2 : 1.

2. Zusammensetzung gemäß Anspruch 1 weiterhin **gekennzeichnet durch** eines oder mehrere der folgenden Merkmale:
a) die Zusammensetzung enthält die Komponenten (b.1) und (b.2) in der Summe zu 0,25 bis 2,5 Gew.%, bezogen auf die Trockenmasse von (a);
b) die Zusammensetzung enthält die Komponenten (b.1) und (b.2) in einem Gewichtsverhältnis von 20 : 1 bis 5 : 1;
c) die zumindest teilweise veresterten aliphatischen polycyclischen Carbonsäuren weisen in Bezug auf die Carbonsäure mindestens drei miteinander unmittelbar verknüpfte Kohlenstoffcyklen, insbesondere genau drei Kohlenstoffcyklen, auf, vorzugsweise in Form von 6-Ringen;
d) die zumindest teilweise veresterten aliphatischen polycyclischen Carbonsäuren sind Monocarbonsäuren und vorzugsweise ist die -C(=O)-O- Gruppe am Carbonylkohlenstoffatom mit einem Kohlenstoffcyklus verknüpft;
e) die zur Veresterung der aliphatischen polycyclischen Carbonsäuren eingesetzten Alkohole sind Polyole, die 3 bis 6 Hydroxy-Gruppen und drei bis 12 Kohlenstoffatome aufweisen, insbesondere Pentaerythrit;
f) die Kohlenwasserstoffe sind zu größer 10 Gew.%, vorzugsweise zu größer 60 Gew.% und insbesondere zu größer 80 Gew.% n-Alkane;
g) die Komponente (b.2) weist als Säuregruppe Abietinsäure, Neoabietinsäure, Lävopimarsäure, Pimarsäure, Palustrinsäure, Abietinsäure und/oder Pimarinsäure bzw. **durch** Hydrieren der Doppelbindung zugängliche Derivate auf;
h) die aliphatischen Kohlenwasserstoffe sind langkettige, gesättigte Kohlenwasserstoffe, Fischer-Tropsch-Wachse, Polyolefinwachse und/oder aus Erdöl gewonnene Paraffinwachse;
i) die Hydrophobierungsmittel sind in Mischung Wachsfeststoffe mit einem Erstarrungspunkt von größer 35 bis 150 °C, insbesondere 40 bis 100 °C;
j) die Komponente (b.2) weist im Mittel mehr als 20 Kohlenstoffatome auf;
k) die Zusammensetzung enthält weiterhin Emulgatoren, vorzugsweise anionische Emulgatoren auf Basis von Fettsäuren oder verseiften Fettsäuren.

3. Zusammensetzung nach zumindest einem der vorhergehenden Ansprüche, **dadurch gekennzeichnet, dass** die Lignocellulosen in Form von Holzfasern, Holzspänen und / oder Holzstrands vorliegen.

4. Verfahren zur Hydrophobierung von Lignocellulosen umfassend zumindest die Schritte
• in Kontaktbringen der Lignocellulosen in Form von Fasern, Spänen und / oder Strands mit dem Hydrophobierungsmittel in Form der Zusammensetzung gemäß einem der vorhergehenden Ansprüche enthaltend die Komponenten (b.1) und (b.2) und
• Verpressen der hydrophobierten Lignocellulosen zu einem Werkstoff.

5. Verfahren nach Anspruch 4, **dadurch gekennzeichnet, dass** die Lignocellulosen in Form von Holzfasern, Holzspänen und / oder Holzstrands vorliegen und der Werkstoff ein Holzwerkstoff ist.

6. Verfahren gemäß Anspruch 4 oder 5, **dadurch gekennzeichnet, dass** das in Kontakt bringen mit dem Hydrophobiermittel in Form einer oder mehrerer Wachsdispersionen aufweisend als kontinuierliche Phase jeweils Wasser und enthaltend die Komponenten (b.1) und/oder (b.2) in Form von Wachsfeststoffteilchen erfolgt, vorzugsweise in Form einer Wachsdispersionen enthaltend die Komponenten (b.1) und (b.2).

7. Verfahren gemäß Anspruche 6, **dadurch gekennzeichnet, dass** die Wachsfeststoffteilchen in der kontinuierlichen Phase mittlere Teilchendurchmesser von 10 nm bis kleiner 10 µm, insbesondere 100 nm bis 3 µm, haben.

8. Verfahren gemäß zumindest einem der Ansprüche 6 oder 7, **dadurch gekennzeichnet, dass** in Wachsdispersion größer 0,1 bis kleiner 6 Gew.% Emulgator enthalten ist.

9. Verfahren gemäß zumindest einem der Ansprüche 6 bis 8, **dadurch gekennzeichnet, dass** die Wachsdispersion aufweist:
• von kleiner 70 Gew.% bis 30 Gew.%, vorzugsweise von 40 bis 60 Gew.%, Wasser,
• von größer 0,5 bis 10 Gew.% , vorzugsweise von 1 bis 4 Gew.%, zumindest einen Emulgator und
• von größer 20 bis 80 Gew.% , vorzugsweise von 40 bis 60 Gew.%, Wachse bildend die disperse Phase (Wachsphase), wobei die Wachse
• zu 99 bis 75 Gew.%, vorzugsweise von 95 bis 85 Gew.%, bezogen auf die Wachsphase, Komponete (b.1) umfassen und
• zu 1 Gew.% bis zu 25 Gew.%, vorzugsweise von 5 bis 15 Gew.%, bezogen auf die Wachsphase, Komponente (b.2) umfassen.

10. Verfahren gemäß zumindest einem der Ansprüche 6 bis 9, **dadurch gekennzeichnet, dass** das Kontaktieren der Fasern, Späne oder Strands in Wasser eingebracht bzw. aufgeschlämmt mit der Wachsdispersion erfolgt oder die Wachsdispersion zur Anlagerung auf die Fasern, Späne oder Strands aufgesprüht wird.

11. Verfahren gemäß Anspruch 4 oder 5, wobei das in Kontakt bringen mit dem Hydrophobiermittel in Form einer auf über 35 °C erhitzten Schmelze der Komponenten (b.1) und (b.2) erfolgt, vorzugsweise durch Aufsprühen der Schmelze.

12. Verfahren gemäß zumindest einem der Ansprüche 4 bis 11, **gekennzeichnet durch** eines oder mehrere der folgenden Merkmale
a) die Werkstoffe sind mitteldichte Faserplatten, hochdichte Faserplatten (HDF), OSB (Oriented Strand Boards) oder Spanplatten;
b) die Werkstoffe sind hochdichte Faserplatten (HDF) und werden als Trägerplatten in Laminatfußböden eingesetzt;
c) die Lignocellulosen sind aus Laubholz erhältlich oder umfassen Laubholz.

13. Verfahren gemäß zumindest einem der Ansprüche 4 bis 12, **dadurch gekennzeichnet, dass** bezogen auf das Trockengewicht der Lignocellulosen 0,5 bis 3,5 Gew.%, der Komponenten (b.1) und (b.2) in Summe eingebracht sind.

14. Verfahren gemäß zumindest einem der Ansprüche 4 bis 13, **dadurch gekennzeichnet, dass** das Verfahren vor dem Verpressen noch den Schritt des Trocknens der hydrophobierten Lignocellulosen umfasst.

15. Hydrophobierte Werkstoffe, insbesondere Holzwerkstoffe, herstellbar nach dem Verfahren gemäß zumindest einem der 4 bis 14.

## Claims

1. A composition comprising the following components
(a) lignocelluloses in the form of fibers, chippings and/or strands
and
a hydrophobizing agent containing:
(b.1) aliphatic hydrocarbons with an average of more than 20 to 100 carbon atoms, and
(b.2) at least partially esterified aliphatic polycyclic carboxylic acids, wherein the alcohols used for esterification of the aliphatic polycyclic carboxylic acids are polyols comprising 2 to 8 hydroxy groups and 2 to 12 carbon atoms, and
wherein said components (b.1) and (b.2) are contained in the composition:
- in total at 0.2 to 5 wt.% relative to the dry mass of (a), and
- at a weight ratio of 40:1 to 2:1.

2. The composition according to claim 1, furthermore **characterized by** one or more of the following characteristics:
a) said composition contains said components (b.1) and (b.2) in total at 0.25 to 2.5 wt.% relative to the dry mass of (a);
b) said composition contains said components (b.1) and (b.2) at a weight ratio of 20:1 to 5:1;
c) in respect of the carboxylic acid, said at least partially esterified aliphatic polycyclic carboxylic acids comprise at least three directly interlinked carbon cycles, in particular exactly three carbon cycles, preferably in the form of 6-rings;
d) said at least partially esterified aliphatic polycyclic carboxylic acids are monocarboxylic acids, and the -C(=O)-O- group at the carbonyl carbon atom is preferably linked with a carbon cycle;
e) said alcohols used for esterification of said aliphatic polycyclic carboxylic acids are polyols comprising 3 to 6 hydroxy groups and 3 to 12 carbon atoms, in particular pentaerythritol;
f) said hydrocarbons are n-alkanes at more than 10 wt.%, preferably at more than 60 wt.%, and in particular at more than 80 wt.%;
g) as the acid group, said component (b.2) comprises abietic acid, neoabietic acid, levopimaric acid, pimaric acid, palustric acid, abietic acid and/or pimaric acid or derivatives obtainable via hydrogenation of the double bond, respectively;
h) said aliphatic hydrocarbons are saturated long-chain hydrocarbons, Fischer-Tropsch waxes, polyolefin waxes and/or paraffin waxes produced from crude oil;
i) in mixture, said hydrophobizing agents are wax solids with a solidification point of more than 35 to 150 °C, in particular 40 to 100 °C;
j) on average, said component (b.2) comprises more than 20 carbon atoms;
k) said composition furthermore contains emulsifying agents, preferably anionic emulsifying agents on the basis of fatty acids or saponified fatty acids.

3. The composition according to at least one of the preceding claims, **characterized in that** said lignocelluloses are present in the form of wood fibers, wood chippings and/or wood strands.

4. A method for hydrophobizing lignocelluloses comprising at least the steps of
• contacting said lignocelluloses in the form of fibers, chippings and/or strands with said hydrophobizing agent in the form of said composition according to any of the preceding claims, containing said components (b.1) and (b.2), and
• pressing said hydrophobized lignocelluloses into a material.

5. The method according to claim 4, **characterized in that** said lignocelluloses are present in the form of wood fibers, wood chippings and/or wood strands and said material is a wood material.

6. The method according to claims 4 or 5, **characterized in that** said contacting with said hydrophobizing agent takes place in the form of one or more wax dispersions comprising as a continuous phase respectively water and containing said components (b.1) and/or (b.2) in the form of wax solid particles, preferably in the form of a wax dispersion containing said components (b.1) and (b.2).

7. The method according to claim 6, **characterized in that** said wax solid particles in the continuous phase have average particle diameters of 10 nm to less than 10 µm, in particular 100 nm to 3 µm.

8. The method according to at least one of claims 6 or 7, **characterized in that** emulsifying agent is contained in said wax dispersion at more than 0.1 to less than 6 wt.%.

9. The method according to at least one of claims 6 to 8, **characterized in that** said wax dispersion comprises:
• water from less than 70 wt.% to 30 wt.%, preferably from 40 to 60 wt.%,
• at least one emulsifying agent from more than 0.5 to 10 wt.%, preferably from 1 to 4 wt.%, and
• waxes forming the disperse phase (wax phase) from more than 20 to 80 wt.%, preferably from 40 to 60 wt.%, wherein said waxes
• comprise component (b.1) at 99 to 75 wt.%, preferably from 95 to 85 wt.% relative to the wax phase, and
• comprise component (b.2) at 1 wt.% up to 25 wt.%, preferably from 5 to 15 wt.% relative to the wax phase.

10. The method according to at least one of claims 6 to 9, **characterized in that** said contacting of said fibers, chippings or strands takes place introduced into water or suspended with said wax dispersion or said wax dispersion being sprayed onto said fibers, chippings or strands for deposition.

11. The method according to claims 4 or 5, wherein said contacting with said hydrophobizing agent takes place in the form of a melt of said components (b.1) and (b.2) heated to more than 35 °C, preferably by spraying on of the melt.

12. The method according to at least one of claims 4 to 11 **characterized by** one or more of the following characteristics
a) said materials are medium-dense fiber boards, highly dense fiber boards (HDF), OSB (oriented strand boards) or chipboards;
b) said materials are highly dense fiber boards (HDF) and are used as carrier plates in laminate flooring;
c) said lignocelluloses are available of hardwood or comprise hardwood.

13. The method according to at least one of claims 4 to 12, **characterized in that** relative to the dry weight of said lignocelluloses, 0.5 to 3.5 wt.% of said components (b.1) and (b.2) are introduced in total.

14. The method according to at least one of claims 4 to 13, **characterized in that** said method also comprises the step of drying said hydrophobized lignocelluloses before pressing them.

15. Hydrophobized materials, in particular wood materials, producible according to the method according to at least one of claims 4 to 14.

## Revendications

1. Composition comprenant les composants suivants :
(a) des lignocelluloses sous la forme de fibres, de copeaux et/ou de lamelles et
un agent de traitement hydrophobe comprenant :
(b.1) des hydrocarbures aliphatiques ayant en moyenne plus de 20 à 100 atomes de carbone et
(b.2) des acides carboxyliques polycycliques aliphatiques au moins partiellement estérifiés, les alcools mis en oeuvre pour l'estérification des acides carboxyliques polycycliques aliphatiques étant des polyols qui présentent 2 à 8 groupes hydroxy et deux à 12 atomes de carbone et
dans laquelle les composants (b.1) et (b.2) sont présents dans la composition :
- au total à un taux de 0,2 à 5 % en poids, par rapport à la matière sèche de (a) et
- en un rapport pondéral de 40/1 à 2/1.

2. Composition selon la revendication 1, **caractérisée** également par une ou plusieurs des caractéristiques suivantes :
a) la composition comprend les composants (b.1) et (b.2) au total à un taux de 0,25 à 2,5 % en poids par rapport à la matière sèche de (a) ;
b) la composition comprend les composants (b.1) et (b.2) en un rapport pondéral de 20/1 à 5/1 ;
c) les acides carboxyliques polycycliques aliphatiques au moins partiellement estérifiés présentent, en ce qui concerne l'acide carboxylique, au moins trois cycles carbonés reliés directement entre eux, en particulier trois cycles carbonés exactement, de préférence sous la forme d'hexacycles ;
d) les acides carboxyliques polycycliques aliphatiques au moins partiellement estérifiés sont des monoacides carboxyliques et de préférence le groupe -C(=O)-O- est relié à un cycle carboné au niveau de l'atome de carbone carbonyle ;
e) les alcools mis en oeuvre pour l'estérification des acides carboxyliques polycycliques aliphatiques sont des polyols qui présentent 3 à 6 groupes hydroxy et trois à 12 atomes de carbone, en particulier le pentaérythrite ;
f) les hydrocarbures sont à plus de 10 % en poids, de préférence à plus de 60 % en poids, et particulièrement à plus de 80 % en poids des n-alcanes ;
g) le composant (b.2) présente comme groupe acide l'acide abiétique, l'acide néoabiétique, l'acide lévopimarique, l'acide pimarique, l'acide palustrique, l'acide abiétique et/ou l'acide pimarique ou des dérivés accessibles par l'hydratation de la double liaison ;
h) les hydrocarbures aliphatiques sont des hydrocarbures saturés à longue chaîne, des cires de Fischer-Tropsch, des cires de polyoléfines et/ou des cires de paraffine extraites du pétrole ;
i) les agents de traitement hydrophobe sont en mélange des cires solides ayant un point de solidification de plus de 35 à 150°C, en particulier de 40 à 100°C ;
j) le composant (b.2) présente en moyenne plus de 20 atomes de carbone ;
k) la composition comprend en outre des émulsifiants, de préférence des émulsifiants anioniques à base d'acides gras ou d'acides gras saponifiés.

3. Composition selon au moins l'une des revendications précédentes, **caractérisée en ce que** les lignocelluloses se présentent sous la forme de fibres de bois, de copeaux de bois et/ou de lamelles de bois.

4. Procédé de traitement hydrophobe de lignocelluloses comprenant au moins les étapes consistant à :
• mettre en contact des lignocelluloses sous la forme de fibres, de copeaux et/ou de lamelles avec l'agent de traitement hydrophobe sous la forme de la composition selon l'une des revendications précédentes comprenant les composants (b.1) et (b.2) et
• compresser les lignocelluloses rendues hydrophobes pour former un matériau.

5. Procédé selon la revendication 4, **caractérisé en ce que** les lignocelluloses se présentent sous la forme de fibres de bois, de copeaux de bois et/ou de lamelles de bois et **en ce que** le matériau est un matériau en bois.

6. Procédé selon la revendication 4 ou 5, **caractérisé en ce que** la mise en contact avec l'agent de traitement hydrophobe se fait sous la forme d'une ou de plusieurs dispersions de cires présentant à titre de phase continue respectivement de l'eau et comprenant les composants (b.1) et/ou (b.2) sous la forme de particules de cire solides, de préférence sous la forme d'une dispersion de cire contenant les composants (b.1) et (b.2).

7. Procédé selon la revendication 6, **caractérisé en ce que** les particules de cire solides dans la phase continue ont des granulométries moyennes de 10 nm à moins de 10 µm, en particulier de 100 nm à 3 µm.

8. Procédé selon au moins une des revendications 6 ou 7, **caractérisé en ce que** plus de 0,1 à moins de 6 % en poids d'émulsifiant sont présents dans la dispersion de cire.

9. Procédé selon au moins une des revendications 6 à 8, **caractérisé en ce que** la dispersion de cire comprend :
• moins de 70 % en poids à 30 % en poids, de préférence de 40 à 60 % en poids d'eau,
• plus de 0,5 à 10 % en poids, de préférence de 1 à 4 % en poids, d'au moins un émulsifiant et
• plus de 20 à 80 % en poids, de préférence de 40 à 60 % en poids de cires formant la phase dispersée (phase de cire), où les cires comprennent
- de 99 à 75 % en poids, de préférence de 95 à 85 % en poids, par rapport à la phase de cire, du composant (b.1) et
- de 1 % en poids à 25 % en poids, de préférence de 5 à 15 % en poids, par rapport à la phase de cire, du composant (b.2).

10. Procédé selon au moins une des revendications 6 à 9, **caractérisé en ce que** la mise en contact des fibres, des copeaux ou des lamelles avec la dispersion de cire s'effectue par immersion ou suspension dans l'eau, ou la dispersion de cire est pulvérisée pour le dépôt sur les fibres, copeaux ou lamelles.

11. Procédé selon la revendication 4 ou 5, dans lequel la mise en contact avec l'agent de traitement hydrophobe s'effectue sous la forme d'une matière fondue des composants (b.1) et (b.2) chauffée à plus de 35°C, de préférence par pulvérisation de la matière fondue.

12. Procédé selon au moins une des revendications 4 à 11, **caractérisé par** une ou plusieurs des caractéristiques suivantes
a) les matériaux sont des panneaux de fibres moyenne densité, des panneaux de fibres haute densité (HDF), des OSB (Oriented Strand Boards ; panneaux de fibres orientées) ou des panneaux de copeaux ;
b) les matériaux sont des panneaux de fibres haute densité (HDF) et sont utilisés comme panneaux supports pour les sols stratifiés ;
c) les lignocelluloses peuvent être extraites du bois de feuillus ou comprennent du bois de feuillus.

13. Procédé selon au moins une des revendications 4 à 12, **caractérisé en ce que** 0,5 à 3,5 % en poids des composants (b.1) et (b.2) au total sont introduits, par rapport au poids de la matière sèche des lignocelluloses.

14. Procédé selon au moins une des revendications 4 à 13, **caractérisé en ce que** le procédé comprend encore, avant la compression, l'étape consistant à sécher les lignocelluloses rendues hydrophobes.

15. Matériaux rendus hydrophobes, en particulier matériaux en bois, pouvant être fabriqués d'après le procédé selon au moins une des revendications 4 à 14.
